# EUROPEAN PATENT SPECIFICATION

(11) **EP 0 466 196 B1**
(45) Date of publication and mention of the grant of the patent: **15.11.1995**
(21) Application number: 91111785.1
(22) Date of filing: 15.07.1991
(51) Int. Cl.: B62K 23/08, B62M 25/06

(54) **Motorcycle with pedal structure**
Motorrad mit Pedalanordnung
Motocyclette avec agencement de pédale

(30) Priority: 13.07.1990 JP 186105/90
(43) Date of publication of application: 15.01.1992
(73) Proprietor: YAMAHA HATSUDOKI KABUSHIKI KAISHA, Iwata-shi Shizuoka-ken, 438 (JP)
(72) Inventor: Muramatsu, Takayoshi, Shizuoka-ken 438 (JP)
(74) Representative: Grünecker, Kinkeldey, Stockmair & Schwanhäusser Anwaltssozietät

(56) References cited:
- EP-A- 0 090 918
- US-A- 1 642 376
- US-A- 2 617 505

## Description

This invention relates to a a motorcycle comprising a frame assembly suspending front and rear wheels and carrying a seat for accommodating a rider, an engine and change speed transmission carried by said frame assembly for driving said rear wheel, a pair of foot pegs carried at the lower portion of said frame assembly on opposite sides thereof for accommodating the feed of a rider seated upon said seat, a brake assembly for braking at least one of said wheels and a master cylinder for energizing said brake assembly, and operating pedals for operating the change speed transmission and the brake assembly, respectively.

As is well known, most motorcycle assemblies include a frame having a seat on which a rider seats in straddle fashion. A pair of foot pegs are carried at the lower end of the frame at opposite sides thereof for the rider to rest his feet when riding. Frequently, there are also provided foot controls for operating certain components of the motorcycle. For example, it is common to have a change speed transmission on the motorcycle that is operated by a rotatably supported lever which rotates a cam drum to shift the shift forks and engage the selected gears of the transmission. In addition, there are may be provided a foot operated brake that is operated by a pedal which actuates either a master cylinder or a cable system for applying one or both of the wheel brakes of the motorcycle. Conventionally, these brake and/or transmission operating pedals are positioned adjacent the foot pegs so the operator can operate them when is feet are still on the foot pegs. Although this arrangement has an apparent advantage, it also has some disadvantages.

Specifically, when the pedals for operating the motorcycle are positioned in close proximity to the foot pegs, the operator tends to operate them through ankle action. As a result, the operator is not capable of exerting large forces on the pedal, as may be required for good operation. Also, the close proximity of the pedals to the foot pegs does not afford the opportunity of incorporating a linkage system for multiplying the force operated by the operator's foot to the actuated device.

EP-A-0 090 918 shows a foot pedal structure for a motorcycle including a foot pedal pivotally supported on a respective foot peg. A bolt supporting a foot peg is connected to a supporting plate and forms a pivot bearing for an operating lever which is a part of the foot peg.

However, such a support of the foot pedal is disadvantageous in that its position is determined by the position of the respective foot pegs, which are often positioned in an area where the available space is needed for accommodating the engine or the transmission or the like.

It is therefore an objective of the present invention to provide a motorcycle having an improved pedal structure wherein the operating pedal for operating the transmission or the brake assembly can be operated conveniently by the feet of a rider and does not increase the width of the motorcycle to maximise the amount the rider may lean the motorcycle when cornering.

According to the present invention, the aforementioned objective is performed in that the operating pedal for operating the transmission or the brake assembly is pivotally supported by means of a pivot pin disposed in front of the engine, said operating pedal extending from the pivot pin rearwards towards the respective footpeg.

Further preferred embodiments of the present invention are laid down in the subclaims. In the following a preferred embodiment of the present invention is explained in greater detail referring to the drawings as attached.

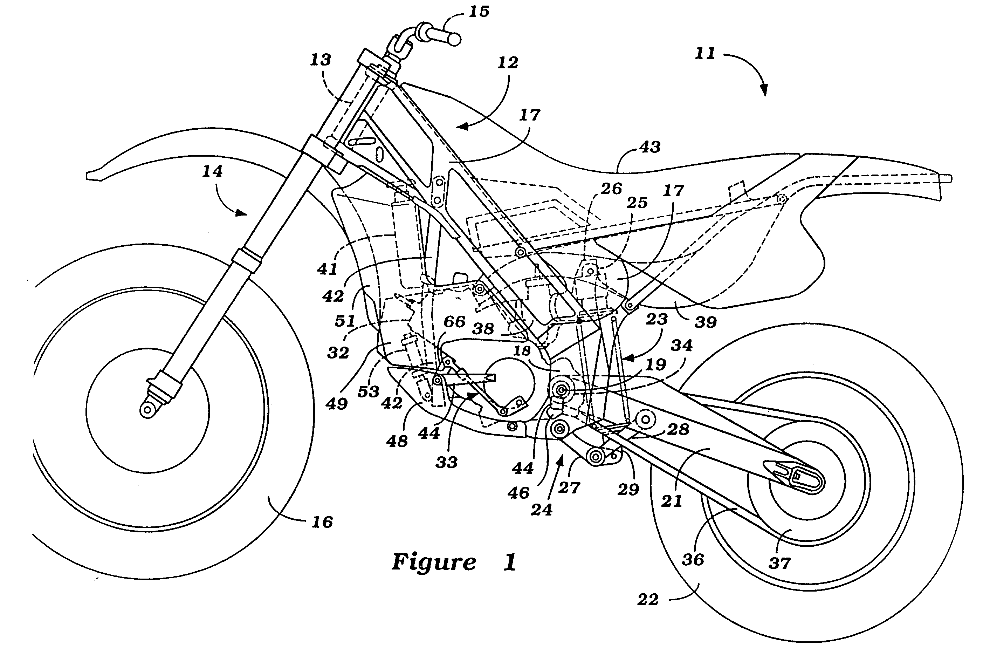

Figure 1 is a side elevation view of a motorcycle having a pedal arrangement constructed in accordance with an embodiment of the invention.

Figure 2 is a front elevation view of the motorcycle with the front fork and front wheel removed to more clearly show details of the construction.

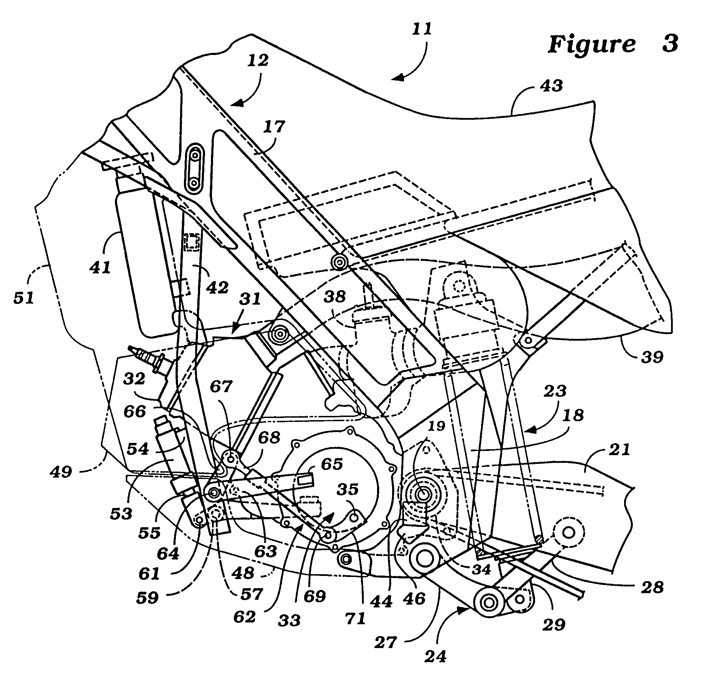

Figure 3 is an enlarged side elevational view of the motorcycle looking from the side depicted in Figure 1.

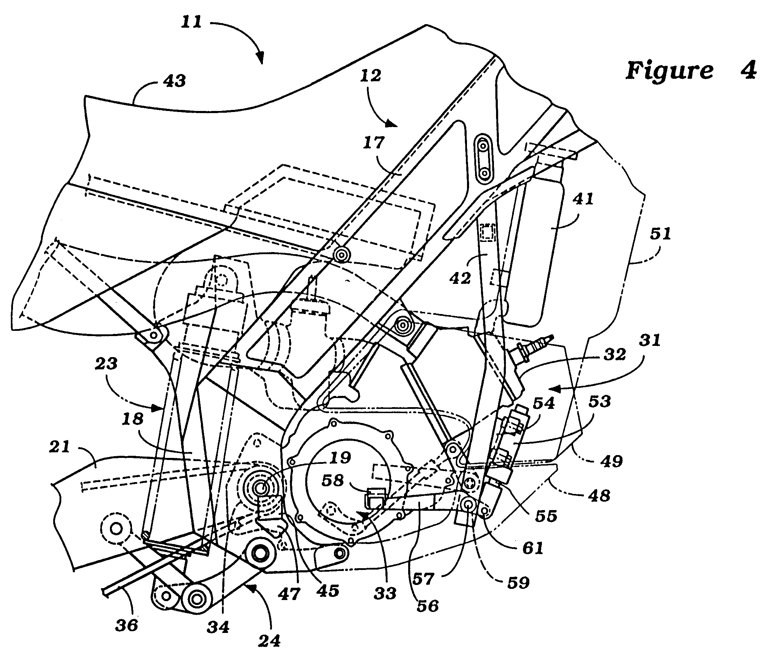

Figure 4 is an enlarged side elevational view looking in the opposite direction.

### DETAILED DESCRIPTION OF THE PREFERRED EMBODIMENT OF THE INVENTION

Referring in detail to the drawings, a motorcycle constructed in accordance with an embodiment of the invention is identified generally by the reference numeral 11. The invention is described in conjunction with a motorcycle because it has particular utility with this type of vehicle since this type or vehicle is normally operated by a rider seated on a seat in straddle fashion and operating certain components of the motorcycle with his feet. Of course, the invention can be practiced with other types of vehicles having such seating and control arrangements. The motorcycle 11 is comprised of a frame assembly, indicated generally by the reference numeral 12 and which is of a welded construction of the type known as a "Delta-Box" type. This type of frame assembly has a head pipe 13 that journals a front fork assembly 14 for steering movement about an upright and slightly rearwardly inclined steering axis by means of a handle bar assembly 15 in a known manner. A front wheel 16 is rotatably supported at the lower end of the front fork assembly 14. The front fork assembly 14 may include, if desired, a suspension system of any known type.

A pair of main frame members 17 which may be comprised of fabrications formed from a light alloy material are affixed at their forward ends to the head pipe 13 and extend rearwardly and downwardly therefrom to a rear suspension supporting fabrication 18. The fabrication 18 provides a pivotal support 19 for a trailing arm assembly 21. The trailing arm assembly 21 in turn rotatably journals a rear wheel 22 which is driven, in a manner to be described.

A suspension element, indicated generally by the reference numeral 23 is interposed between the frame assembly 12 and a linkage system, indicated generally by the reference numeral 24 which linkage system loads the suspension element 23 upon pivotal movement of the trailing arm 21. The suspension element 23 includes a hydraulic shock absorber that is surrounded by a coil compression spring. At its upper end, the suspension element 23 carries a trunion portion 25 that affords attachment to a frame member 26 which is suitably affixed to the rear ends of the main frame members 17.

The linkage assembly 24 includes a first link 27 that is pivotally mounted to the fabrication 18 and a second link 28 that is pivotally connected to the trailing arm 21 and to the first link 27. The suspension element 23 has a piston rod 29 that is pivotally connected to an extension of the link 27 so the suspension element 23 will be loaded on pivotal movement of the trailing arm 23.

A power plant, comprised of a combined internal combustion engine and change speed transmission assembly, indicated generally by the reference numeral 31, is suspended in the frame assembly 12 and drives the rear wheel 22. In the illustrated embodiment, the power plant 31 includes a single cylinder internal combustion engine of the water cooled type operating on a two stroke crankcase compression principle. This engine has a forwardly inclined cylinder assembly 32 defining a single cylinder bore that is inclined to the vertical in a forward direction and extends in a nearly horizontal plane. Although the invention is described in conjunction with such a single cylinder engine, it will be readily apparent to those skilled in the art that the invention can be employed with other types of units.

The crankcase of the engine is provided with a change speed transmission which is indicated generally by the reference numeral 33. This transmission may be of any known type and generally incorporates parallel primary and secondary shafts on which a plurality of intermeshing gear sets are provided. These gear sets are selectively engaged for driving relationship with their respective shafts to transmit power to an output sprocket 34 by means of a shifting mechanism including a shifting drum (not shown) that is journaled with a shaft 35 that is accessible through a side of the transmission 33 for shifting purposes. This shifting drum, as is well known in this art, has one or more grooves in which shift forks are slideably supported for operating dog clutches associated with the gears to accomplish their shifting.

The sprocket 34 has its axis of rotation coaxial with the pivot point 19 of the trailing arm 23 and drives a chain 36 which, in turn, drives a sprocket 37 that is affixed to the rear wheel 22 for driving the rear wheel in a known manner.

The power unit 31 and specifically the engine portion thereof has an induction system that is comprised of a carburetor 37 that is positioned rearwardly of the cylinder 32 and which draws air through an air inlet device (not shown) for delivery to the intake port of the engine in a known manner.

The charge which has been burnt in the engine is discharged through an exhaust system which includes an exhaust pipe and expansion chamber unit 38 that extends rearwardly and to one side of the motorcycle 11 for discharge of the silenced exhaust gases to the atmosphere in a well known manner.

The engine portion of the power unit 31 is also at least partially water cooled and for this purpose a cooling radiator 41 is supported by the frame assembly above the cylinder 32. The coolant is circulated through the radiator 41 from the cooling jacket of the engine in a known manner.

The radiator 41 is suspended from the main frame member 17 and a pair of down tubes 42 that are affixed to the main frame members 17 and which depend downwardly therefrom.

A seat 43 is carried at the upper portion of the frame assembly 12 and primarily by the main frame members 17. The seat 43, as is typical with motorcycle practice, is adapted to accommodate a rider seated thereon in straddle fashion with his legs depending on opposite sides of the frame assembly 12 adjacent the fabrication 18. Left and right foot pegs 44 and 45 are carried at the opposite sides of the frame assembly on the fabrication 18 by mounting brackets 46 and 47, respectively. The connection between the foot pegs 44 and 45 and the brackets 46 and 47 is a pivotal connection so that the operator may pivot the foot pegs 44 and 45 up out of their normal positions if desired. The figures all illustrate the foot pegs 44 and 45 in their normal outwardly extending positions.

The motorcycle 11 is provided with certain body components such as a skid plate 48 that extends beneath the lower portion of the motorcycle so as to protect the power unit 31 and certain other components, as should be readily apparent. In addition, a front plate 49 encircles the forward portion of the engine and protects it. A pair of side plates 51 extend along opposite sides of the motorcycle and admit air to the radiator 41 while providing side protection for the rider's legs.

One or both of the front and rear wheels 16 and 21 is provided with a hydraulically operated brake assembly, which may be of any known type, such as either a disk or drum type of brake. Either or both of these brake assemblies are energized by a master cylinder, indicated generally by the reference numeral 53 and which is mounted in a generally vertically extending position at the front of the frame assembly 12 by one of the down tubes 42.

In the illustrated embodiment, the brake assembly 53 is mounted by the right hand down tube 42 by means including a bracket 54 that is either welded or otherwise affixed to this down tube. The master cylinder 53 has a downwardly extending piston rod 55 that is actuated by means of a pedal operated linkage assembly that is positioned on the right hand side of the motorcycle 11 and which includes a brake pedal lever 56 that is pivotally supported on the downtube 42 that supports the master cylinder 53 by means of a pivot pin 57 which, it should be noted, is spaced a substantial distance forwardly of the right hand foot peg 45. The lever 56 is, in fact, a bell crank and has a long rearward portion that carries a pedal 58 that is positioned so that is may be operated by the right hand foot of the operator. However, the location is such that the operator should take is foot off of the foot peg 45 to press the pedal 58. As a result, the operator will operate the brake pedal lever 56 through knee rather than ankle action. This permits him to exert a greater force on the brake pedal 58 then with prior art constructions wherein the pedal is normally operated by ankle action.

The brake pedal lever 56 has shorter lever arm portion 59 that extends forwardly of the pivot point 57 and which has a pivotal connection 61 to the piston rod 55 of the master cylinder 53 for actuating it. As a result of this arrangement, not only is the operator able to exert a greater force on the brake pedal 58 then with previous types of constructions wherein ankle action was required but the mechanical advantage of the pedal lever 56 will further amplify the force applied to the master cylinder 53. As a result, substantially greater braking forces may be generated from a given operator actuating force.

A pedal operated structure, indicated generally by the reference numeral 62 is provided at the left hand side of the motorcycle 11 of operating the transmission shift drum shaft 35. This mechanism includes a shift pedal lever 63 that is pivotally supported on the left hand down tube 42 by means of a pivot pin 64. The lever 63 extends rearwardly from the pivotal support toward the left hand foot peg 44 but terminates at a pedal portion 65 that is spaced forwardly thereof so that an operator must remove his left hand foot in order to actuate the pedal 65. Again, this permits the operator to use knee action for accomplishing shifts rather then only ankle action and the operator is thus able to exert greater forces on the pedal 65 then with prior art constructions.

The pedal lever 63 is also a bell crank and has a upwardly extending arm portion 66 which is shorter in length than the portion 63 and which has a pivotal connection 67 to one end of a shift control link 68. The opposite end of the shift control link 68 is pivotally connected, by means of a pivot pin 69 to a shift lever 71 that is affixed to the shift shaft 35. Again, this construction provides a mechanical advantage so that a given input force exerted by the operator's left foot will exert a greater rotational force on the shift shaft 35 so as to assist in shifting.

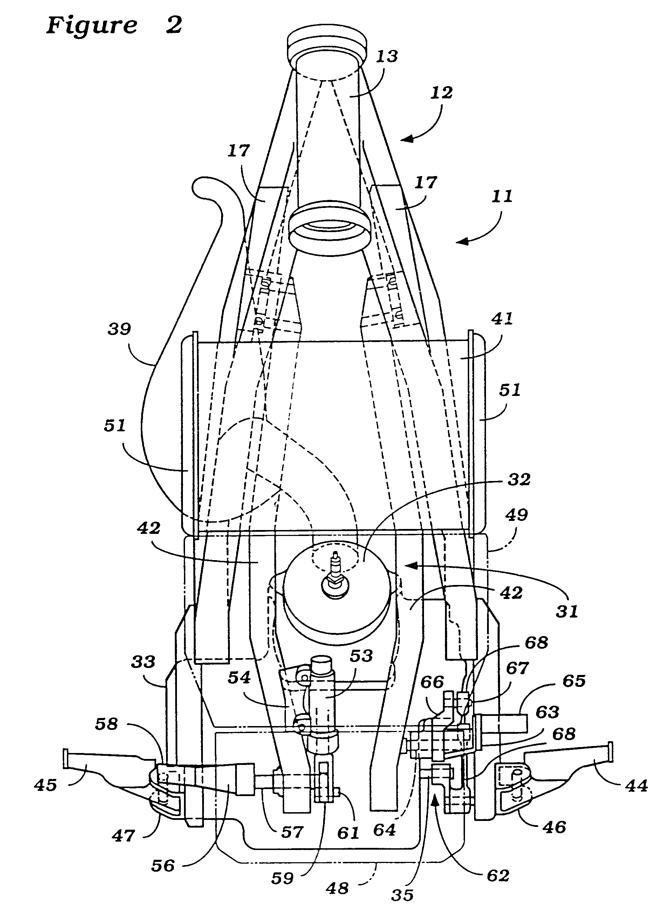

As may be seen in Figure 2, by placing the brake pedal 58 and shift pedal 65 forwardly of the foot pegs 44 and 45, it is also possible to place these pedals at a narrow distance L and narrower than the width of the foot pegs 44 and 45 and thus provide a more compact assembly. This protects the pedals 58 and 65 and the linkage actuated thereby from damage in the event of extreme leaning or in the event the motorcycle should fall over. This inward placement is also possible because of the fact that the operator does not operate these pedals with his feet placed upon the foot pegs 44 and 45.

It should be readily apparent from the foregoing description that the described construction permits an extremely compact motorcycle pedal construction while, at the same time, permitting the operator to exert greater forces on these pedals than with prior art type of construction. Of course, the foregoing description is that of a preferred embodiment of the invention and various changes and modifications may be made without departing from the spirit and scope of the invention, as defined by the appended claims.

## Claims

1. A motorcycle comprising a frame assembly (12) suspending front and rear wheels (16, 22) and carrying a seat (43) for accommodating a rider, an engine and change speed transmission (33) carried by said frame assembly (12) for driving said rear wheel (22), a pair of foot pegs (44, 45) carried at the lower portion of said frame assembly on opposite sides thereof for accommodating the feed of a rider seated upon said seat (43), a brake assembly for braking at least one of said wheels and a master cylinder for energizing said brake assembly, and operating pedals (58, 56; 65, 63) for operating the change speed transmission (33) and the brake assembly, respectively,
**characterized in that,**
the operating pedal (58, 56; 65, 63) for operating the transmission (33) or the brake assembly is pivotally supported by means of a pivot pin (64) disposed in front of the engine, said operating pedal (58, 56; 65, 63) extending from the pivot pin (57, 64) rearwards towards the respective foot peg (44, 45).

2. A motorcycle as claimed in claim 1, **characterised in that** the operating pedal (58) for operating the brake assembly is operatively connected to the master cylinder (53) through a linkage system.

3. A motorcycle as claimed in at least one of the preceding claims 1 or 2, **characterised in that** the operating pedal comprises a bell crank (56) carrying a pedal (58).

4. A motorcycle as claimed in claim 3, **characterised in that** the bell crank (56) is pivotally supported on the frame assembly (12) and its lever arm carrying the pedal (58) is longer than the lever arm connected to a linkage assembly (61, 55) connecting the bell crank (56) to the master cylinder, providing a mechanical advantage for amplifying the force applied to the master cylinder (53) from the force applied by the operator.

5. A motorcycle as claimed in at least one of the preceding claims 1 to 4, **characterised in that** the master cylinder (53) is supported in a generally vertically extending direction at the front of the frame assembly (12).

6. A motorcycle as claimed in at least one of the preceding claims 1 to 5, **characterised in that** the operating pedal (63, 65) for operating the transmission (33) is a part of a pedal assembly (62) connected to the transmission (33).

7. A motorcycle as claimed in claim 6, **characterised in that** the pedal assembly (62) is connected to a rotary shift selector shaft (35) of the transmission (33) which is disposed forwardly of said foot peg (44).

8. A motorcycle as claimed in at least one of the preceding claims 6 or 7, **characterised in that** the operating pedal (65, 63) operates the shift selector shaft (35) through a linkage system (66, 68, 71).

9. A motorcycle as claimed claim 8, **characterised in that** the operating pedal (65, 63) and linkage system (66, 68, 71) provide a mechanical advantage for amplifying the force applied to the shift selector shaft (35) from the force applied by the operator.

10. A motorcycle as claimed in claim 9, **characterised in that** the pedal assembly (62) comprises a bell crank (63) carrying the pedal (65).

11. A motorcycle as claimed in claim 10, **characterised in that** the bell crank (63) is connected to the shift selector (71) through a linkage assembly (66, 68) wherein its lever arm carrying the pedal (65) is longer than the lever arm connected to the linkage assembly (66, 68).

12. A motorcycle as claimed in claim 11, **characterised in that** the shift selector shaft (35) is positioned closer to the foot peg (44) than the pivotal support for the bell crank (63).

13. A motorcycle as claimed in at least one of the preceding claims 1 to 12, **characterised in that** the first mentioned operating pedal (58) is supported at one side of the frame assembly (12) and the second mentioned operating pedal (65) is supported by the frame assembly at the other side thereof.

14. A motorcycle as claimed in at least one of the preceding claims 1 to 13, **characterised in that** the operating pedals (58, 56, 65, 63) are positioned closer to a longitudinal centre line of the motorcycle than the foot pegs (44, 45).

## Patentansprüche

1. Kraftrad mit einer Rahmenanordnung (12), die ein Vorder- und Hinterrad (16, 22) lagert und einen Sitz (43) trägt, um einem Fahrer Platz zu bieten, einem Motor und einem Schaltgetriebe (33), die durch die Rahmenanordung (12) gelagert sind, zum Antrieb des Hinterrades (22), einem Paar Fußrasten (44, 45), gelagert an dem unteren Abschnitt der Rahmenanordnung auf gegenüberliegenden Seiten derselben, um den Füßen eines Fahrers, der auf dem Sitz (43) sitzt, Platz zu bieten, einer Bremsanordnung zum Bremsen zumindest eines der Räder und einem Hauptbremszylinder zur Energieversorgung der Bremsanordnung, und Betätigungspedalen (58, 56; 65, 63) zur Betätigung des Schaltgetriebes (33) bzw. der Bremsanordnung,
**dadurch gekennzeichnet,** daß
das Betätigungspedal (58, 56; 65, 63) zur Betätigung des Getriebes (33) oder der Bremsanordnung drehbar durch einen Drehzapfen (64) gelagert ist, der vor dem Motor angeordnet ist, wobei sich das Betätigungspedal (58, 56; 65, 63) von dem Drehzapfen (57, 64) nach hinten zu der jeweiligen Fußraste (44, 45) erstreckt.

2. Kraftrad nach Anspruch 1, **dadurch gekennzeichnet,** daß das Betätigungspedal (58) zur Betätigung der Bremsanordnung durch eine Verbindungsvorrichtung betrieblich mit dem Hauptbremszylinder (53) verbunden ist.

3. Kraftrad nach zumindest einem der vorhergehenden Ansprüche 1 oder 2, **dadurch gekennzeichnet,** daß das Betätigungspedal einen Kniehebel (56) aufweist, der ein Pedal (58) trägt.

4. Kraftrad nach Anspruch 3, **dadurch gekennzeichnet,** daß der Kniehebel (56) drehbar an der Rahmenanordnung (12) gelagert ist und sein Hebelarm, der das Pedal (58) trägt, länger ist als der Hebelarm, der mit einer Verbindungsanordnung (61, 65) verbunden ist, die den Kniehebel (56) mit dem Hauptbremszylinder verbindet, wobei dies einen mechanischen Vorteil zur Verstärkung der Kraft schafft, mit der der Hauptbremszylinder (53) von der Kraft, die durch die Bedienungsperson aufgebracht wird, beaufschlagt wird.

5. Kraftrad nach zumindest einem der vorhergehenden Ansprüche 1-4, **dadurch gekennzeichnet,** daß der Hauptbremszylinder (53) in einer im wesentlichen vertikal verlaufenden Richtung an der Vorderseite der Rahmenanordnung (12) gelagert ist.

6. Kraftrad nach zumindest einem der vorhergehenden Ansprüche 1-5, **dadurch gekennzeichnet,** daß das Betätigungspedal (63, 65) zur Betätigung des Getriebes ein Teil einer Pedalanordnung (62) ist, die mit dem Getriebe (33) verbunden ist.

7. Kraftrad nach Anspruch 6, **dadurch gekennzeichnet,** daß die Pedalanordung (62) mit einer Schaltwahldrehwelle (35) des Getriebes (33) verbunden ist, die vor der Fußraste (44) angeordnet ist.

8. Kraftrad nach zumindest einem der vorhergehenden Ansprüche 6 oder 7, **dadurch gekennzeichnet,** daß das Betätigungspedal (65, 63) die Schaltwahlwelle (35) durch eine Verbindungsvorrichtung (66, 68, 71) betätigt.

9. Kraftrad nach Anspruch 8, **dadurch gekennzeichnet,** daß das Betätigungspedal (65, 63) und die Verbindungsvorrichtung (66, 68, 71) einen mechanischen Vorteil zur Verstärkung der Kraft schafft, mit der die Schaltwahlwelle (35) von der Kraft, die durch die Bedienungsperson aufgebracht wird, beaufschlagt wird.

10. Kraftrad nach Anspruch 9, **dadurch gekennzeichnet,** daß die Pedalanordnung (62) einen Kniehebel (63) aufweist, der das Pedal (65) trägt.

11. Kraftrad nach Anspruch 10, **dadurch gekennzeichnet,** daß der Kniehebel (63) mit der Schaltwahlvorrichtung (71) durch eine Verbindungsanordnung (66, 68) verbunden ist, wobei dessen Hebelarm, der das Pedal (65) trägt, länger ist als der Hebelarm, der mit der Verbindungsanordnung (66, 68) verbunden ist.

12. Kraftrad nach Anspruch 11, **dadurch gekennzeichnet,** daß die Schaltwahlwelle (35) näher zu der Fußraste (44) als das Drehlager für den Kniehebel (63) angeordnet ist.

13. Kraftrad nach zumindest einem der vorhergehenden Ansprüche 1-12, **dadurch gekennzeichnet,** daß das erwähnte erste Betätigungspedal (58) auf einer Seite der Rahmenanordnung (12) gelagert ist und das erwähnte zweite Betätigungspedal (65) durch die Rahmenanordnung auf deren anderen Seite gelagert ist.

14. Kraftrad nach zumindest einem der vorhergehenden Ansprüche 1-13, **dadurch gekennzeichnet,** daß die Betätigungspedale (58, 56, 65, 63) näher zu der Längsmittellinie des Kraftrades angeordnet sind als die Fußrasten (44, 45).

## Revendications

1. Motocyclette comprenant un ensemble de châssis (12), sur lequel sont montées de façon suspendue des roues avant et arrière (16, 22) et supportant un siège (43) pour loger un conducteur, un moteur et une boite de vitesses (33) supportée par ledit ensemble formant châssis (12) pour entraîner ladite roue arrière (22), un couple de repose-pieds (44, 45) monté sur la partie inférieure dudit ensemble formant châssis, sur ces cotés opposés, pour loger les pieds d'un conducteur assis sur ledit siège (43), un ensemble de freinage pour freiner au moins l'une desdites roues et un maître-cylindre pour activer ledit ensemble de freinage, et des pédales d'actionnement (58, 56; 65, 63) pour actionner la boite de vitesses (33) et l'ensemble de freinage, respectivement,
caractérisée en ce que,
la pédale d'actionnement (58, 56; 65, 63) prévue pour actionner la boite de vitesses (33) ou l'ensemble de freinage est montée pivotante au moyen d'un tourillon de pivotement (64) disposé devant le moteur, ladite pédale d'actionnement (58, 56; 65, 63) s'étendant depuis le tourillon de pivotement (57, 64) vers l'arrière, vers le cale-pieds (44, 45) respectif.

2. Motocyclette selon la revendication 1, caractérisée en ce que la pédale d'actionnement (58) prévue pour actionner l'ensemble de freinage est connectée en fonctionnement au maître-cylindre (53) via un système d'articulation.

3. Motocyclette selon au moins l'une des revendications 1 ou 2 précédentes, caractérisée en ce que la pédale d'actionnement comprend un levier coudé (56) supportant une pédale (58).

4. Motocyclette selon la revendication 3, caractérisée en ce que le levier coudé (56) est monté pivotant sur l'ensemble formant châssis (12) et son bras de levier supportant la pédale (58) est plus long que le bras de levier connecté à un ensemble d'articulation (61, 55) reliant le levier coudé (56) au maître-cylindre, offrant un effet de levier, pour amplifier la force appliquée au maître-cylindre (53) depuis la force appliquée par l'opérateur.

5. Motocyclette selon au moins l'une des revendications 1 à 4 précédentes, caractérisée en ce que le maître-cylindre (53) est supporté dans une direction s'étendant globalement verticalement, à l'avant de l'ensemble formant châssis (12).

6. Motocyclette selon au moins l'une des revendications 1 à 5 précédentes, caractérisée en ce que la pédale d'actionnement (63, 65) prévue pour actionner la boite de vitesses (33) fait partie d'un ensemble de pédale (62) connecté à la boite de vitesses (33).

7. Motocyclette selon la revendication 6, caractérisée en ce que l'ensemble de pédale (62) est connecté à un arbre de sélection de changement de vitesse (35) rotatif de la boite de vitesses (33), qui est disposé à l'avant dudit cale-pieds (44).

8. Motocyclette selon au moins l'une des revendications 6 ou 7 précédentes, caractérisée en ce que la pédale d'actionnement (65, 53) actionne l'arbre de sélection de changement de vitesse (35), via un système d'articulation (66, 68, 71).

9. Motocyclette selon la revendication 8, caractérisée en ce que la pédale d'actionnement (65, 63) et le système d'articulation (66, 68, 71) offrent un effet de bras de levier pour amplifier la force appliquée à l'arbre sélecteur de changement de vitesse (35), depuis la force appliquée par l'opérateur.

10. Motocyclette selon la revendication 9, caractérisée en ce que l'ensemble de pédale (62) comprend un levier coudé (63) supportant la pédale (65).

11. Motocyclette selon la revendication 10, caractérisée en ce que le levier coudé (63) est connecté au sélecteur de changement de vitesse (71), via un ensemble de liaison (66, 68), dans lequel son bras de levier supportant la pédale (65) est plus long que le bras de levier connecté à l'ensemble d'articulation (66, 68).

12. Motocyclette selon la revendication 11, caractérisée en ce que l'arbre sélecteur de changement de vitesse (35) est disposé plus près du cale-pied (44) que le support pivotant prévu pour le levier coudé (63).

13. Motocyclette selon au moins l'une des revendications 1 à 12 précédentes, caractérisée en ce que la pédale d'actionnement (58) précitée est supportée d'un coté de l'ensemble formant châssis (12) et la pédale d'actionnement (65) mentionnée en deuxième est supportée par l'ensemble formant châssis de son autre coté.

14. Motocyclette selon au moins l'une des revendications 1 à 13 précédentes, caractérisée en ce que les pédales d'actionnement (58, 56, 65, 63) sont disposées plus près d'un axe longitudinal de la motocyclette, que les cale-pieds (44, 45).
